# EUROPEAN PATENT SPECIFICATION

(11) **EP 0 413 509 B1**
(45) Date of publication and mention of the grant of the patent: **02.04.1997**
(21) Application number: 90308759.1
(22) Date of filing: 09.08.1990
(51) Int. Cl.: G05B 19/406

(54) **Apparatus for detecting machining states in a machine tool**
Vorrichtung zum Feststellen des Arbeitszustands in einer Werkzeugmaschine
Appareil pour détecter des conditions d'usinage dans une machine-outil

(30) Priority: 15.08.1989 JP 209621/89
(43) Date of publication of application: 20.02.1991
(73) Proprietor: SEIKO SEIKI KABUSHIKI KAISHA, Narashino-shi Chiba (JP)
(72) Inventor: Ota, Masato, c/o Seiko Seiki Kabushiki Kaisha, Narashino-shi, Chiba (JP)
(74) Representative: Sturt, Clifford Mark

(56) References cited:
- EP-A- 0 177 154
- WO-A-90/02022
- DE-A- 1 402 994
- US-A- 4 744 242
- SOVIET ENGINEERING RESEARCH, vol. 7, no. 3, March 1987, pages 58-60, Melton Mowbray, GB; I.R. DOBROVINSKYI et al.: "Active control of the cutting tool condition on CNC-controlled machines"
- PATENT ABSTRACTS OF JAPAN, vol. 7, no. 173 (M-232)[1318], 30th July 1983; & JP-A-58 77 432 (KOMATSU SEISAKUSHO K.K.) 10-05-1983

## Description

The present invention relates to an apparatus for detecting machining states in a machine tool during a machining process, and a machine tool provided with the apparatus.

Known techniques for detecting machining states in a machine tool during a machining process can involve the detection of (1) machining strength or force, (2) vibrations and sounds, (3) heat, (4) machining power, or (5) machining dimensions (residual stock removal amount).

The following are specific examples.

In the case of machining strength or force (1), this is detected by the use of (1a) a distortion gauge or a piezo-electric element which is mounted on a work rest or a tool rest, and (1b) a distortion gauge mounted on a work bearing centre, or is detected on the basis of (1c) variations in pocket pressure of a hydrostatic fluid bearing which carries a tool (workpiece) spindle.

In the case of vibrations and sounds (2), the latter are detected by the use of (2a) an AE sensor or a vibration sensor which is provided on the work rest, the tool rest bearing centre or a shoe, and (2b) an AE sensor or a vibration sensor which is attached to the tool (workpiece) spindle for carrying a rolling bearing.

In the case of heat (3), the latter is detected by heat detection sensors embedded in the workpiece and the tool.

In the case of machining power (4), the detection of the latter involves a detection of the rotary driving power of the tool (workpiece) spindle.

In the case of machining dimensions (residual stock removal amount) (5), the machining dimensions are detected on the basis of a difference between the cutting feed per stroke and the dimensions of the workpiece during the machining process.

The following are defects inherent in the above-mentioned techniques for detecting the machining states.

In the case of the machining strength or force (1), the detection of the machining force (1a) is limited to a case where the workpiece is movable within a given range as well as being restricted so as to support rigidity thereof, (1b) limits the bearing mode of the workpiece to the centre bearing, and (1c) decreases responsiveness to variations in speed.

In the case of vibrations and sounds (2), detections of vibrations and sounds are applied only to abnormalities within a narrow range, and (2b) involves the use of a bearing so as to damp the vibrations, causing a drop in the S/N ratio because of detecting even rolling vibrations.

The detection of heat (3) is of low practicability and responsiveness.

The detection of machining power (4), in addition to a low responsiveness, is limited to the power which acts only in a tangential line and is insufficient for a grinding process wherein variations in a normal line are large.

The detection of machining dimensions (5) is of slow responsiveness because of being detected after effecting the machining process.

In any case, the detecting function is low. Furthermore, the above-mentioned means are simple condition-detecting means but are unable to analyze multiple conditions by highly accurate detection and to output an output signal capable of effecting the corresponding control over the machine tool.

EP-A-0 177 154 discloses the use of bandpass filters for filtering information from a non-contact type displacement sensor to solve the problem of distinguishing between machining and non-machining states.

DE-A-1 402 994 relates to the provision of a smoothing circuit to enable eccentricity in a workpiece to be detected.

According to the present invention, there is provided an apparatus for detecting machining states of a workpiece in a machine tool in which the workpiece and a tool rotate, the apparatus comprising a non-contact type displacement detector means for detecting predetermined displacement of a part of a workpiece or tool carrying member of the machine tool and for producing detection signals in relation thereto; a plurality of different frequency band pass filters coupled to the detector means so as to receive the detection signals from the latter; and comparator means for comparing output signals of said different frequency band pass filters with respective reference set values, characterised in that the apparatus further comprises processing means for receiving the comparator outputs and deriving machining state information therefrom during the machine operation and, in response to the derived machining state information, adjusting the rate of the machining of the workpiece from rough grinding to fine grinding.

The detector means may comprise an optical sensor, or an electromagnetic induction sensor or a capacitance sensor or an eddy current sensor.

Preferably, one of said frequency band pass filters comprises a workpiece rotational frequency band pass filter which is adapted to pass a frequency component corresponding to the eccentricity of the machining surface of the workpiece.

Preferably, another of said frequency band pass filters comprises a workpiece rotational frequency partial band pass filter which is adapted to pass a frequency component corresponding to sectional distortion of the machining surface of the workpiece.

Preferably, a further one of said frequency band pass filters comprises a tool spindle rotary bending resonant frequency band pass filter which is adapted to pass a frequency component corresponding to the machining force applied to the workpiece.

In its preferred form, the apparatus for detecting machining states in a machine tool may provide high accuracy in the analysis and control of multiple machining conditions.

The detector means may be arranged to detect radial displacements of a work spindle or a tool spindle of the machine tool in a region adjacent to a bearing.

The displacement may correspond to states under which the machine tool starts operating, and the tool contacts the workpiece to follow various unfinished surfaces, and to a machining state and a machining surface state of the workpiece during machining. As a result of inputting the detection signals to the various frequency band pass filters, the machining states and the workpiece are discriminated. The comparators compare the output signals from the frequency band pass filters with the set reference values. The respective states are judged from the comparative results. Comparative judgement signals are inputted to a control unit, thereby controlling the machine tool to automatically perform appropriate machining operations.

The present invention also relates to a machine tool provided with the apparatus for detecting machining states.

The invention is illustrated, merely by way of example, in the accompanying drawings, in which:-
Figure 1 is partly a plan view of an internal grinding machine provided with an apparatus for detecting grinding/machining states, according to the present invention and partly a block diagram of the said apparatus for detecting grinding/machining states incorporated therein;
Figure 2 is a block diagram illustrating a grinding/machining state detecting circuit of the grinding/machining state detecting apparatus of Figure 1; and
Figure 3 is a flowchart showing control processes of the internal grinding machine of Figure 1.

Terms such as "left" and "right", as used in the description below, are to be understood to refer to directions as seen in the accompanying drawings.

In the drawings there is shown an internal grinding machine provided with an apparatus for detecting machining states according to the present invention.

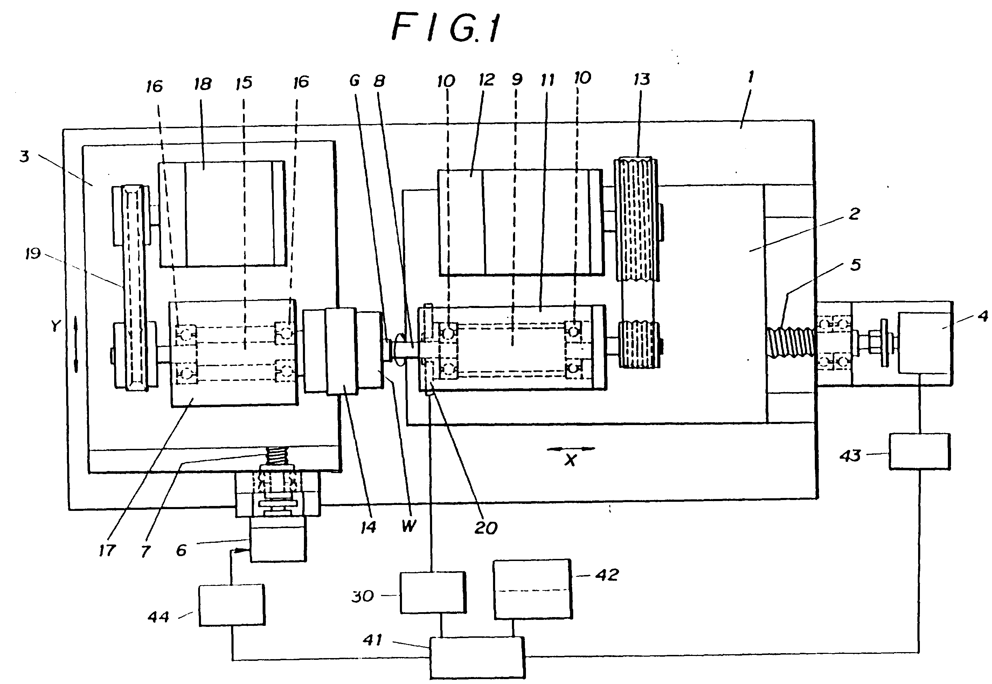

Mounted on a bed 1 in Figure 1 are a wheel spindle stock 2 slidable in X-axis directions and a work head table 3 slidable in Y-axis directions. The wheel spindle stock 2 is moved back and forth in the X-axis directions by a servo motor 4 through a feed screw mechanism 5. The work head table 3 is moved to and fro in the Y-axis directions by a servo motor 6 through a feed screw mechanism 7.

A wheel head 11 and a motor 12 are mounted on the wheel spindle stock 2. Rotatably mounted in the wheel head 11 by means of rolling bearings 10, 10 which extend in the X-axis direction is a main wheel spindle 9 which is provided at one end thereof, i.e. its left hand or "top" end, with a wheel spindle 8 which carries a grinding wheel or grinding member G. The main wheel spindle 9 is rotationally driven by the motor 12 via a belt transmission mechanism 13.

Mounted on the work head table 3 are a work head 17 and a motor 18. Rotatably mounted in the work head 17 by means of rolling bearings 16, 16 which extend in the X-axis direction is a work spindle 15 provided at one end thereof, i.e. its right hand or "top" end with a chuck 14. The work spindle 15 is rotationally driven by the motor 18 via a belt transmission mechanism 19.

A grinding program control unit provided with a machining state detecting apparatus comprises a non-contact type displacement detector (e.g. an optical sensor, an electromagnetic induction sensor, a capacitance sensor or an eddy current sensor) 20; a grinding/machining state detecting circuit 30 for processing and judging detection signals inputted from the displacement detector 20; a process monitor 41; a sequence program unit/numerical control unit 42; and feed driving circuits 43 and 44.

The displacement detector 20 is disposed adjacent to the rolling bearing 10 adjacent to the wheel spindle 8. The detector 20 is provided to detect a radial displacement of the wheel spindle 8 in cutting-axis directions in the wheel head 11. The term "radial displacement" herein is intended to refer to radial displacement of the wheel spindle itself and to deflective displacement thereof or any one of these displacements.

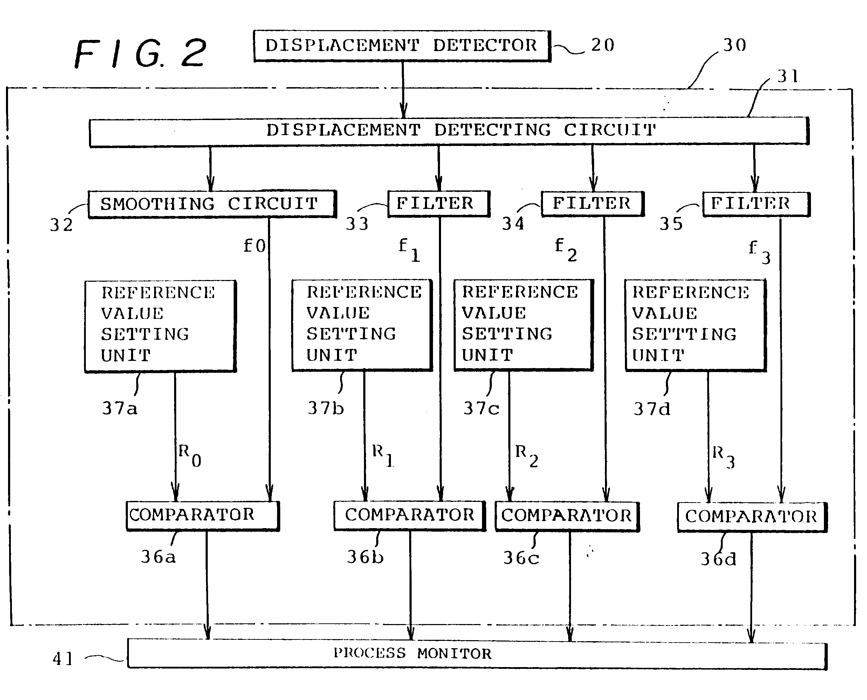

As shown in Figure 2, the grinding/machining state detecting circuit 30 comprises a state displacement detecting circuit 31, a smoothing circuit 32, a workpiece rotational frequency band pass filter 33, a workpiece rotational frequency partial band pass filter 34, a wheel spindle rotary bending resonant frequency band pass filter 35, comparators 36a through 36d, and reference value setting units 37a through 37d. These components are connected to operate in the following manner.

The displacement detecting circuit 31, when it has been inputted with displacement detecting signals from the displacement detector 20 converts these signals into voltages. The thus converted displacement detecting signals are inputted respectively to the comparators 36a through 36d via the smoothing circuit 32 (for time-averaging the displacement signals), the workpiece rotational frequency band pass filter 33 (Nw pass filter), the workpiece rotational frequency partial band pass filter 34 (Nw - nNw pass filter) and the wheel spindle rotary bending resonant frequency band pass filter 35 (Nc pass filter). Inputted to the comparators 36a through 36d are set reference value signals set in the reference value setting units 37a through 37d. The comparators 36a through 36d compare the inputted displacement detecting signals with the set reference value signals. If there are differences therebetween, difference signals are inputted to the process monitor 41.

The process monitor 41 and the sequence program unit/numerical control unit 42 input command signals to the feed driving circuits 43 and 44 of the feed servo motors 4 and 6. The servo motor 4 connected to the driving circuit 43 is controllably driven by this circuit 43 upon being inputted. The servo motor 6 connected to the driving circuit 44 is controllably driven by this circuit 44 upon being inputted.

The operation and function of the grinding program control unit will now be described.

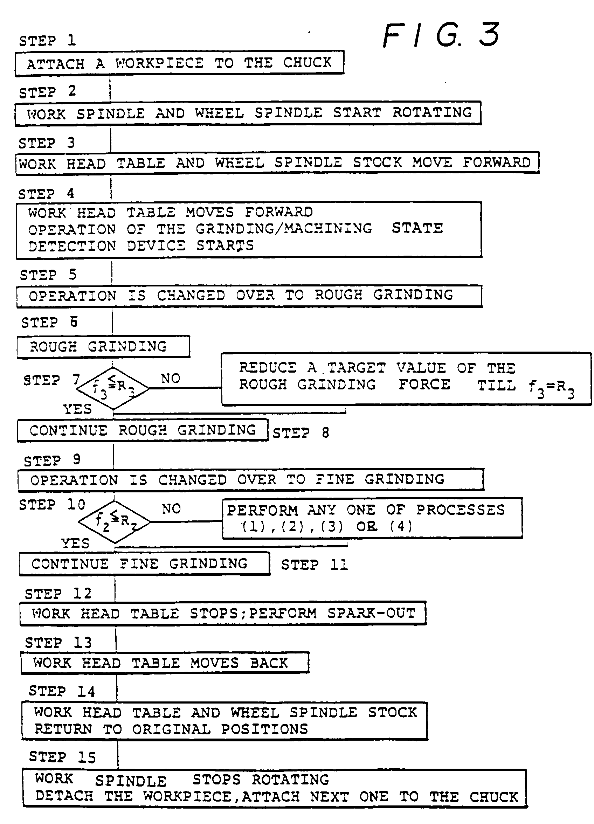

Grinding/machining processes are illustrated in the flow chart of Figure 3.

The operation starts with chucking a workpiece W by use of the chuck 14 (step 1).

The motor 18 rotates at a predetermined velocity in response to a command from the sequence program unit/numerical control unit 42. As a result, the work spindle 15, and consequently a workpiece W carried thereby, is rotationally driven via the belt transmission mechanism 19. Simultaneously, the motor 12 functions to rotationally drive the main wheel spindle 9, and thus the grinding wheel G, through the belt transmission mechanism 13 (step 2).

The servo motor 6 is controlled by the control unit 42 and operates to move forward (downward in Figure 1) the work head table 3 via the feed screw mechanism 7. A hollow portion of the workpiece W is positioned to face the grinding wheel G. On the other hand, the servo motor 4 is controlled by the control unit 42 and operates to move forward (leftward in Figure 1) the wheel spindle stock 2 through the feed screw mechanism 5. The grinding wheel G is forced to enter the hollow portion of the workpiece W (step 3).

The work head table 3 is advanced at a slightly high gap-eliminate velocity by the actuation of the servo motor 6. Then starts the operation of the grinding/machining state detecting unit (step 4).

The displacement detector 20 dynamically detects a radial displacement as hereinbefore defined of the wheel spindle 8. Upon a detection of such a radial displacement, a displacement detection signal is inputted to the displacement detecting circuit 31, wherein the displacement detection signal is converted into a voltage signal. The voltage signals are respectively inputted to the smoothing circuit 32, the workpiece rotational frequency band pass filter 33, the workpiece rotational frequency partial band pass filter 34, and to the wheel spindle rotary bending resonant frequency band pass filter 35. As a consequence of detecting the radial displacement with the displacement detector 20, displacement detection signals are obtained which have frequencies corresponding to the respective workpiece conditions and grinding conditions.

Until the grinding wheel G contacts an inner peripheral surface of the workpiece W, a detected displacement signal, which is mainly of a frequency Ng component depending on the rotational accuracy of the wheel spindle 8, is inputted to the displacement detecting circuit 31. There is, however, no output signal from the respective filters.

The grinding wheel G then contacts the inner peripheral surface of the workpiece W. Then starts the grinding process. At this time, a displacement detecting signal corresponding to the state of the inner peripheral surface of the workpiece is overlapped with the detected displacement signal which is mainly of the frequency Ng component depending on the rotational accuracy of the wheel spindle 8. The overlapped signals are inputted to the displacement detecting circuit 31. The detecting signal is then outputted from any one of the smoothing circuit 32, the workpiece rotational frequency band pass filter 33 and the workpiece rotational frequency partial band pass filter 34.

For instance, if neither eccentricity nor distortion appears on the inner peripheral surface of the workpiece W, a detecting signal f₀ coming from the smoothing circuit 32 is to be outputted.

If the inner peripheral surface of the workpiece W undergoes a sectional distortion to assume an ellipse or 3-lobe skew circle or ... n-lobe skew circle, detecting signals f₂ of each partial frequency band is outputted from the band pass filter 34 prior to the detecting signal fₒ. If the inner peripheral surface of the workpiece W is eccentric with respect to the rotary axial line of the work spindle 15, the first priority is given to outputting of the detecting signal f₁ from the band pass filter 33.

The output signals f₀, f₁ and f₂ in any cases are inputted to the comparators 36a through 36c. These output signals are compared with reference values R₀, R₁ and R₂ which are set in the setting units 37a through 37c. As a result of this comparison, if greater than the set reference value, the detecting signal is inputted to the monitor 41.

In consequence of this, the servo motor 6 is controlled via the feed driving circuit 44 by signals A₀, A₁ and A₂ outputted from the monitor 41. The operation is changed over to rough grinding (step 5).

Rough grinding is effected with a predetermined rough grinding force. As rough grinding cutting advances, the output signals f₀, f₁ and f₂ typically increase. When the grinding wheel G contacts the entire periphery, the output signals f₁ and f₂ are reduced down to zero. Provided that the cutting quality of the grinding wheel G does not deteriorate, the output signal f₀ ceases to increase and is kept constant (step 6).

If the detecting signal f₃ from the band pass filter 35 is larger than the reference value R₃ set by the setting unit 37d during a rough grinding feed, a detecting signal A₃ is inputted to the monitor 41. As a result, a predetermined target value of the rough grinding force in a process monitor 41 is reduced until the detecting signal f₃ from the band pass filter 35 reaches the reference value R₃ set by the setting unit 37d. The servo motor 6 undergoes control to be decelerated correspondingly via the feed driving circuit 44 (step 7).

Thus, rough grinding continues with a predetermined rough grinding force by which the displacement detecting signal f₃ from, the band pass filter 35 becomes smaller than the reference value R₃ set by the setting unit 37d until a predetermined fine grinding changeover point is reached (step 8).

For example, the servo motor 6 is controlled via the feed driving circuit 44 by the signals outputted from the monitor 41 during the inputting, to the process monitor 41, of the signals at the time of reaching the fine grinding changeover point, i.e. when a residual grinding stock comes to a set value, that is when a sizing signal set by a sizing unit (not shown in the figures) is outputted, or when a positional signal (a positional detecting means is not shown in the figures) of the work head table 3 comes to a predetermined position, or when the cutting program numerical value from control unit 42 reaches a predetermined value (step 9).

If the detecting signal f₂ from the band pass filter 34 is not smaller than the reference value R₂ set by the setting unit 37c even when coming into the fine grinding process, the detecting signal is inputted to the process monitor 41. On that occasion, any one of the following processes is to be performed.
(1) The predetermined fine grinding operation continues as it is. Even at the termination of fine grinding, if the displacement detecting signal f₂ transmitted from the workpiece rotational frequency partial band pass filter 34 is not less than the reference value R₂ set by the reference value setting unit 37c, the workpiece W concerned is abandoned.
(2) The predetermined target value of the fine grinding force in the monitor 41 is reduced until the detecting signal f₂ from the band pass filter 34 reaches the reference value R₂ set by the setting unit 37c. The servo motor 6 is controlled to decrease the speed through the feed driving circuit 44. Fine grinding continues as it is until a fine grinding ending size is reached.
(3) Fine grinding is immediately stopped, and the workpiece concerned is abandoned.
(4) The predetermined target value of the fine grinding force in the monitor 41 is reduced until the detecting signal f₂ from the band pass filter 34 reaches the reference value R₂ set by the setting unit 37c. The motor 18 is controlled to reduce the speed correspondingly through the driving circuit (not shown). The number of revolutions of the work spindle 15 is reduced (step 10). The fine grinding operation is effected with the predetermined fine grinding force. In normal fine grinding, only the detected displacement signal, which is mainly of the frequency Ng component substantially depending on the rotational accuracy of the wheel spindle 8, is inputted to the displacement detecting circuit 31. Provided that the cutting quality of the grinding wheel G does not deteriorate, the output signal f₀ is also decreased and kept constant (step 11).

When the workpiece reaches finishing dimensions by fine grinding, for instance, the sizing signal set by sizing unit, which is not shown in the figures, is inputted to the process monitor 41. The servo motor 6 is stopped via the feed driving circuit 44 by the signal outputted from the monitor 41. Then, spark-out is performed. The output signal f₀ is also decreased. The detected displacement signal comes to have chiefly the frequency Ng component depending on the rotational accuracy of the wheel spindle 8 (step 12).

Thereafter, the servo motors 4 and 6 are controlled to operate through the feed driving circuits 43 and 44 by the signals outputted from the monitor 41. After the work head table 3 has moved back via the feed screw mechanism 7 (step 13), the wheel spindle stock 2 also retreats via the feed screw mechanism 5. The grinding wheel G is withdrawn from the inside of the hollow portion of the workpiece W, while the wheel spindle stock 2 returns to its original position. Simultaneously, the work head table 3 further moves back to the original position (step 14).

The motor 18 is stopped by the command of the sequence program unit/numerical control unit 42, as a result of which the work spindle 15, and thus the workpiece W, stops rotating. The finished workpiece W is detached and a replacement workpiece is attached by means of the chuck 14 (step 15).

Machining in the above-described embodiment is internal grinding. It will, however, readily be understood that the present invention can be applied to other grinding and cutting operations.

In the apparatus described above, the states during the grinding/cutting operations are detected with a high degree of accuracy. A variety of states are thereby analytically detected. It is therefore feasible to obtain output signals capable of correspondingly controlling the machine tool. The machining state detecting apparatus described above makes possible an highly accurate adaptive control of the machine tool.

## Claims

1. An apparatus for detecting machining states of a workpiece (W) in a machine tool in which the workpiece and a tool (G) rotate, the apparatus comprising a non-contact type displacement detector means (20) for detecting predetermined displacement of a part (8) of a workpiece or tool carrying member (8, 9) of the machine tool and for producing detection signals in relation thereto; a plurality of different frequency band pass filters (33, 34, 35) coupled to the detector means (20) so as to receive the detection signals from the latter; and comparator means (36b, 36c, 36d) for comparing output signals of said different frequency band pass filters (33, 34, 35) with respective reference set values, characterised in that the apparatus further comprises processing means (41) for receiving the comparator outputs and deriving machining state information therefrom during the machine operation and, in response to the derived machining state information, adjusting machining of the workpiece from rough grinding to fine grinding.

2. An apparatus as claimed in claim 1 characterised in that the detector means (20) comprises an optical sensor.

3. An apparatus as claimed in claim 1 characterised in that the detector means (20) comprises an electromagnetic induction sensor.

4. An apparatus as claimed in claim 1 characterised in that the detector means (20) comprises a capacitance sensor.

5. An apparatus as claimed in claim 1 characterised in that the detector means (20) is an eddy current sensor.

6. An apparatus as claimed in any preceding claim characterised in that one of said frequency band pass filters comprises a workpiece rotational frequency band pass filter which is adapted to pass a frequency component corresponding to the eccentricity of the machining surface of the workpiece.

7. An apparatus as claimed in any preceding claim characterised in that one of said frequency band pass filters comprises a workpiece rotational frequency partial band pass filter which is adapted to pass a frequency component corresponding to sectional distortion of the machining surface of the workpiece.

8. An apparatus as claimed in any preceding claim characterised in that one of said frequency band pass filters comprises a tool spindle rotary bending resonant frequency band pass filter which is adapted to pass a frequency component corresponding to the machining force applied to the workpiece.

9. A apparatus as claimed in any preceding claim characterised in that the detector means (20) is for detecting radial displacement of at least one of a workpiece spindle (15) and a tool spindle (8) in an adjacent region of a bearing (10, 16) of at least one of said spindles.

10. An apparatus as claimed in any preceding claim characterised by comprising a smoothing circuit which averages said detection signals in time domain and outputs signals when neither eccentricity or distortion appears on the machine surface of the workpiece.

11. A machine tool characterised by being provided with an apparatus as claimed in any preceding claim, the processing means (41) controlling the operation of the machine tool.

## Patentansprüche

1. Vorrichtung zum Erfassen von Bearbeitungszuständen eines Werkstücks (W) bei einer Werkzeugmaschine, bei welcher das Werkstück und ein Werkzeug (G) sich drehen, wobei die Vorrichtung umfaßt:
- eine berührungsfreie Verlagerungsdetektoreinrichtung (20), um eine vorbestimmte Verlagerung eines Teils (8) eines werkstück- oder werkzeugtragenden Elements (8, 9) der Werkzeugmaschine zu erfassen und um dementsprechende Erfassungssignale zu erzeugen,
- eine Mehrzahl verschiedener Frequenz-Bandpaßfilter (33, 34, 35), welche an die Detektoreinrichtung (20) gekoppelt sind, um die Erfassungssignale von der letzteren zu empfangen, sowie
- Komparatoreinrichtungen (36b, 36c, 36d), um Ausgangssignale der verschiedenen Frequenz-Bandpaßfilter (33, 34, 35) mit jeweiligen Referenzeinstellwerten zu vergleichen,
dadurch gekennzeichnet, daß die Vorrichtung ferner eine Verarbeitungseinrichtung (41) umfaßt, um die Komparatorausgaben zu empfangen und um daraus während des Maschinenbetriebs Bearbeitungszustandsinformationen abzuleiten und in Antwort auf die abgeleiteten Bearbeitungszustandsinformationen die Bearbeitung des Werkstücks von Grobschleifen auf Feinschleifen einzustellen.

2. Vorrichtung nach Anspruch 1, dadurch gekennzeichnet, daß die Detektoreinrichtung (20) einen optischen Sensor umfaßt.

3. Vorrichtung nach Anspruch 1, dadurch gekennzeichnet, daß die Detektoreinrichtung (20) einen elektromagnetischen Induktionssensor umfaßt.

4. Vorrichtung nach Anspruch 1, dadurch gekennzeichnet, daß die Detektoreinrichtung (20) einen Kapazitätssensor umfaßt.

5. Vorrichtung nach Anspruch 1, dadurch gekennzeichnet, daß die Detektoreinrichtung (20) einen Wirbelstromsensor umfaßt.

6. Vorrichtung nach einem der vorangehenden Ansprüche, dadurch gekennzeichnet, daß eines der Frequenz-Bandpaßfilter ein Werkstück-Drehfrequenz-Bandpaßfilter umfaßt, welches dazu ausgelegt ist, eine Frequenzkomponente durchzulassen, die der Exzentrizität der Bearbeitungsfläche des Werkstücks entspricht.

7. Vorrichtung nach einem der vorangehenden Ansprüche, dadurch gekennzeichnet, daß eines der Frequenz-Bandpaßfilter ein Werkstück-Drehfrequenz-Teilbandpaßfilter umfaßt, welches dazu ausgelegt ist, eine Frequenzkomponente durchzulassen, die einer abschnittsweisen Verformung der Bearbeitungsfläche des Werkstücks entspricht.

8. Vorrichtung nach einem der vorangehenden Ansprüche, dadurch gekennzeichnet, daß eines der Frequenz-Bandpaßfilter ein Werkzeugspindel-Drehbiegungsresonanzfrequenz-Bandpaßfilter umfaßt, welches dazu ausgelegt ist, eine Frequenzkomponente durchzulassen, die der auf das Werkstück ausgeübten Bearbeitungskraft entspricht.

9. Vorrichtung nach einem der vorangehenden Ansprüche, dadurch gekennzeichnet, daß die Detektoreinrichtung (20) zum Erfassen von Radialverlagerungen einer Werkstückspindel (15) oder/und einer Werkzeugspindel (8) an einem einem Lager (10, 16) benachbarten Bereich wenigstens einer der Spindeln vorgesehen ist.

10. Vorrichtung nach einem der vorangehenden Ansprüche, dadurch gekennzeichnet, daß sie einen Glättungskreis umfaßt, der die Erfassungssignale zeitlich mittelt und Signale ausgibt, wenn keine Exzentrizität oder Verformung an der Bearbeitungsfläche des Werkstücks auftritt.

11. Werkzeugmaschine, dadurch gekennzeichnet, daß sie eine Vorrichtung nach einem der vorangehenden Ansprüche und eine den Betrieb der Werkzeugmaschine steuernde Verarbeitungseinrichtung (41) aufweist.

## Revendications

1. Dispositif destiné à détecter des états d'usinage d'une pièce (W) à usiner dans une machine-outil dans laquelle la pièce à usiner et un outil (G) tournent, le dispositif comportant des moyens (20) de détection de déplacement du type sans contact destinés à détecter un déplacement prédéterminé d'une partie (8) d'une pièce à usiner ou d'un élément (8,9) porteur d'outil de la machine-outil et destinés à produire des signaux de détection s'y rapportant; une pluralité de filtres (33,34,35) passe-bande de fréquences différentes couplés aux moyens (20) de détection de manière à recevoir les signaux de détection de ces derniers; et des moyens (36b,36c,36d) comparateurs destinés à comparer des signaux de sortie des filtres (33,34,35) passe-bande de fréquences différentes à des valeurs de réglage de référence respectives, caractérisé en ce que le dispositif comporte en outre des moyens (41) de traitement destinés à recevoir les sorties de comparateur et à déduire de ceux-ci des informations d'état d'usinage pendant le fonctionnement de la machine, et, en réponse à l'information d'état d'usinage déduit, à ajuster l'usinage de la pièce à usiner de l'état grossièrement rectifié à finement rectifié.

2. Dispositif suivant la revendication 1, caractérisé en ce que les moyens (20) de détection comportent un capteur optique.

3. Dispositif suivant la revendication 1, caractérisé en ce que les moyens (20) de détection comportent un capteur à induction électromagnétique.

4. Dispositif suivant la revendication 1, caractérisé en ce que les moyens (20) de détection comportent un capteur à capacité.

5. Dispositif suivant la revendication 1, caractérisé en ce que les moyens (20) de détection sont formés d'un capteur à courant de Foucault.

6. Dispositif suivant l'une quelconque des revendications précédentes, caractérisé en ce que l'un des filtres passe-bande de fréquence comporte un filtre passe-bande de fréquence rotationnelle de pièce à usiner qui est adapté pour laisser passer une composante de fréquence correspondant à l'excentricité de la surface d'usinage de la pièce à usiner.

7. Dispositif suivant l'une quelconque des revendications précédentes, caractérisé en ce que l'un des filtres passe-bande de fréquence comporte un filtre passe-bande partiel de fréquence rotationnelle de pièce d'usinage qui est adapté pour laisser passer une composante de fréquence correspondant à la déformation en section de la surface d'usinage de la pièce à usiner.

8. Dispositif suivant l'une quelconque des revendications précédentes, caractérisé en ce que l'un des filtres passe-bande de fréquence comporte un filtre passe-bande de fréquence de résonance de courbure de rotation de broche d'outil qui est adapté pour laisser passer une composante de fréquence correspondant à la force d'usinage appliquée à la pièce à usiner.

9. Dispositif suivant l'une des revendications précédentes, caractérisé en ce que les moyens (20) de détection sont prévus pour détecter un déplacement radial d'au moins une broche (15) de pièce d'usinage et d'une broche (8) d'outil dans une région adjacente d'un palier (10,16) d'au moins l'une des broches.

10. Dispositif suivant l'une des revendications précédentes, caractérisé par le fait de comprendre un circuit de lissage qui effectue une moyenne des signaux de détection dans un domaine de temps et envoie des signaux lorsque ni une excentricité ni une déformation n'apparaissent sur la surface d'usinage de la pièce à usiner.

11. Machine-outil caractérisée par le fait de comprendre un dispositif tel que revendiqué dans n'importe laquelle des revendications précédentes, les moyens (41) de traitement commandant le fonctionnement de la machine outil.
